# EUROPEAN PATENT APPLICATION

(11) **EP 1 510 416 A1**
(43) Date of publication of application: **02.03.2005**
(21) Application number: 04017643.0
(22) Date of filing: 26.07.2004
(51) Int. Cl.: B60R 21/20

(54) **Curtain airbag installation structure**

(30) Priority: 01.09.2003 JP 2003308898; 22.04.2004 JP 2004126958
(71) Applicant: TAKATA CORPORATION, Minato-ku, Tokyo 106-8510 (JP)
(72) Inventor: Noguchi, Atsushi, Minato-ku Tokyo 106-8510 (JP); Masuda, Yasuhi, Minato-ku Tokyo 106-8510 (JP)
(74) Representative: Banzer, Hans-Jörg, Dipl.-Ing.

(57) **Abstract**

A curtain airbag (1) is disposed along a roof side rail (2R) of a motor vehicle in the state of being folded into an elongated shape extending in the fore-and-aft direction. A folded body of the curtain airbag (1) is covered by a roof lining (5) attached to the ceiling portion of the vehicle. A space (S) for allowing passage of the curtain airbag (1) in the course of inflation is formed between an end edge (5a) of the roof lining (5) and a cabin side surface (2f) of a roof side rail (2R). The space (S) is closed by a lip portion (10b) projecting toward the cabin from a weather strip (10) attached to the roof side rail (2R). The lip portion (10b) is provided with a deformation inducing portion (recessed groove) (10c) for inducing bending deformation thereof so that the lip portion (10b) leaves the space S as the curtain airbag 1 which is in the course of inflation passes through the space S.

## Description

### [Technical Field]

The present invention relates to an installation structure of a curtain air bag (curtain-like airbag) deployed along the side surface of a vehicle cabin, and a curtain airbag apparatus.

### [Background Art]

In a motor vehicle provided with a curtain air bag apparatus, in the case where the motor vehicle is involved in a side collision or is rolled on its side, the curtain airbag is inflated downwardly of a vehicle body along the side surface (for example, a door or a pillar) in a vehicle cabin by gas fed from an inflator to protect the head of an occupant, and when an window is open, to prevent the occupant from being thrown out from the vehicle.

In Japanese Patent Publication No. 3329277, a curtain airbag apparatus in which a curtain airbag (in the above-described Patent Publication, it is referred to as "head protecting airbag") is folded and disposed along a roof side rail at the edge of the vehicle on the ceiling side, and a folded body of the curtain airbag is covered by a roof lining attached to the ceiling of the vehicle is disclosed.

In the curtain airbag apparatus of the same Patent Publication, the side portion of the roof lining engages a cabin side member (the upper surface of a mounting portion for an assist grip in an embodiment in the same Patent Publication).

In the curtain airbag apparatus of the same Patent Publication, when the curtain airbag initiates its inflation by gas fed from the inflator, the curtain airbag which is in the course of inflation presses the roof lining, and disengages the side portion of the roof lining from the vehicle side member in the first place, and subsequently inflates downward while pressing and opening the roof lining.

There is a case in which the apparatus is configured in such a manner that when arranging the folded body of the curtain airbag along the roof side rail and covering the same by the roof lining, a presumptive portion to be torn, such as a tear line, is provided on the roof lining, so that the roof lining is torn by a pressing force (internal pressure) of the curtain airbag when the curtain airbag is inflated.

In the curtain airbag apparatus of the related art as described above, it is necessary to increase the internal pressure of the curtain airbag to the level which is sufficient for disengaging the side portion of the roof lining from the cabin side member or tearing the roof lining prior to downward inflation of the curtain airbag along the side surface of the cabin. Therefore, it is necessary to employ the inflator having a high output in order to allow the curtain airbag to be inflated quickly downward.

US Patent publication No. 6,237,938 discloses provision of a guide member for guiding the rear end of the curtain airbag which is inflated along the side surface in the cabin downwardly of the vehicle body along the pillar on a C-pillar.

The guide member of the same patent includes a member shaped like a box in cross section, which is referred to as a track, and a slider member disposed in the track and movable in the longitudinal direction of the track, which is referred to as an element, and a connecting belt provided at the rear end of the curtain airbag, which is referred to as a tether, is tied-in with the element. In order to prevent the slider member and the rear end of the curtain airbag having moved downward from returning upward, one-way clutches are provided substantially along the whole length of the track at regular intervals.

Mounting flanges are provided at the upper end and the lower end of the track, and each flange is attached to the C-pillar with a bolt or a screw.

Generally, the guide member described above is covered by a pillar garnish. When the curtain airbag is inflated, the end of the curtain airbag slides and moves downward with respect to the pillar garnish so as to tear the pillar garnish, or to move the side portion of the pillar garnish away from the pillar.

According to the above configuration of the related art, frictional drag generated when the end of the curtain airbag slide with respect to the pillar garnish is significant as described above. Therefore, it was necessary to employ an inflator having high output power in order to allow the curtain airbag to be inflated quickly.

It is an object of the present invention to provide a curtain airbag installation structure and a curtain airbag apparatus in which the curtain airbag can be inflated quickly downward without increasing the output of the inflator.

### [Means for Solving the Problems]

This object is achieved by an airbag installation structure according to claim 1. The dependent claims define preferred and advantageous embodiments of the present invention.

According to the present invention, the curtain airbag installation structure for a curtain airbag to be deployed downward along the side surface in a vehicle cabin comprises a closing member for closing a space defined for allowing passage of at least a part of the curtain airbag. The space may be formed between an interior panel, e.g. a roof lining or a pillar garnish, and a vehicle member, e.g. a roof side rail or a pillar of the vehicle. The closing member is provided with a deformation inducing means for guiding or inducing the closing member to deform so as to open the space as the curtain airbag moves downward.

The curtain airbag installation structure of the present invention may include a folded body of a curtain airbag disposed along a roof side rail at the edge of the vehicle on the ceiling side, and the folded body of the curtain airbag being covered by the roof lining attached to the ceiling of the vehicle. The space which allows the curtain airbag to pass is then formed between the side portion of the roof lining and the roof side rail, the space being closed by the closing member provided with the deformation inducing means for inducing or guiding deformation of the closing member so as to open the space as the curtain airbag moves downward through the space.

The airbag installation structure may also comprise or take the form of a guide mechanism for guiding the end in the fore-and-aft direction of the curtain airbag which is deployed downward along the side surface in a vehicle cabin, including a guide member for the curtain airbag extending in the vertical direction and attached to a pillar of the vehicle, and a pillar garnish attached to the pillar and covering the guide member. The space which allows passage of the end of the curtain airbag is then defined between the side portion of the pillar garnish and the cabin-side surface of the pillar. The space is closed by the closing member provided with the deformation inducing means for inducing or guiding the closing member to bend in the direction away from the space as the end of the curtain airbag moves downward in the space.

Preferably, in the curtain airbag installation structure according to the present invention a recessed groove is provided as the deformation inducing means.

A curtain airbag apparatus according to the present invention may include a curtain airbag deploying downward along the side surface in the vehicle cabin and preferably folded and disposed along a roof side rail at the edge of the vehicle on the ceiling side, and an inflator for inflating the curtain airbag and comprises a curtain airbag installation structure according to the invention.

The curtain airbag apparatus according to the present invention may in particular include the curtain airbag deploying downward along the side surface in the vehicle cabin, the guide mechanism for guiding the end in the fore-and-aft direction of the curtain airbag having the guide member for the curtain airbag extending in the vertical direction and being attached to the pillar of the vehicle, the pillar garnish attached to the pillar and covering the guide member.

According to the present invention, when the inflator is activated in case of emergency of the vehicle, the curtain airbag is inflated downward passing through the space between the side portion of the roof lining and the roof side rail or being guided in the space between the side portion of the pillar garnish and the cabin side surface of the pillar. Though the space is closed by the closing member, the closing member is provided with the deformation inducing means for inducing deformation of the closing member so as to open the space as the curtain airbag moves downward through or in the space, and hence the curtain airbag can pass through the space easily while deforming the closing means.

Therefore, since the curtain airbag can be inflated downward through the space even when the internal pressure is relatively low, the curtain airbag can be inflated quickly downward without increasing the output of the inflator.

In comparison with the related art in which the end of the curtain airbag tears the pillar garnish, or moves the pillar garnish downward while sliding the same in the direction away from the pillar, a resistance force applied to the end of the curtain airbag is small, and hence the curtain airbag can quickly be inflated downward without increasing the output power of the inflator.

Since the space is closed by the closing member in the normal state, the space is indistinctive and hence a good appearance can be maintained. Also, foreign matters such as dust or dirt are prevented from entering through the space into the backside of the roof lining or into the pillar garnish.

The recessed groove is preferable as the deformation inducing means since the structure is simple.

According to the present invention, the curtain airbag may be configured in such a manner that a connecting belt extending from the end thereof is provided, the connecting belt is connected to the guide member, and the connecting belt passes through the space when the curtain airbag is deployed downward.

In this arrangement, the connecting belt slides with respect to the closing member when the curtain airbag is inflated, and hence the frictional drag with respect to the closing member can further be reduced.

Referring to the attached drawings, embodiments of the present invention will be described below.

### [Brief Description of the Drawings]

Fig. 1 is a schematic side view of a vehicle cabin having a structure according to an embodiment.
Fig. 2(a) is a cross-sectional view taken along the line II-II in Fig. 1(a), and Fig. 2(b) is a cross-sectional view of the same portion when a curtain airbag is inflated.
Fig. 3 is a schematic side view of a vehicle cabin provided with a guide mechanism for a curtain airbag according to a further embodiment of the present invention.
Fig. 4(a) is a cross-sectional view taken along the line II-II in Fig. 3(a), and Fig. 4(b) is a cross-sectional view showing a state in which a connecting belt passes through the portion of the cross-section in Fig. 4(a).
Fig. 5 is a perspective view showing the curtain airbag of Fig. 3 and 4 and a guide rod.

### [Detailed Description of Preferred Embodiments]

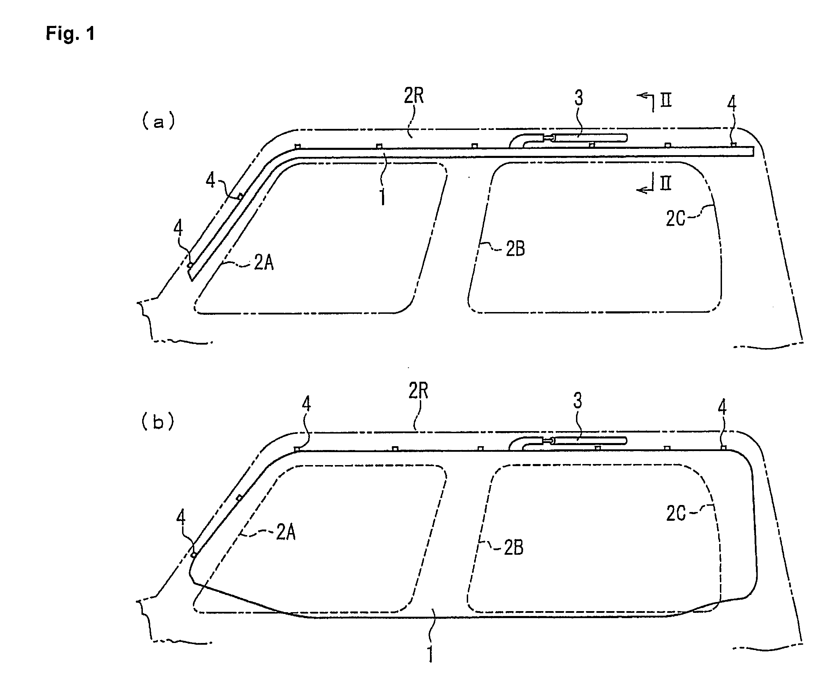

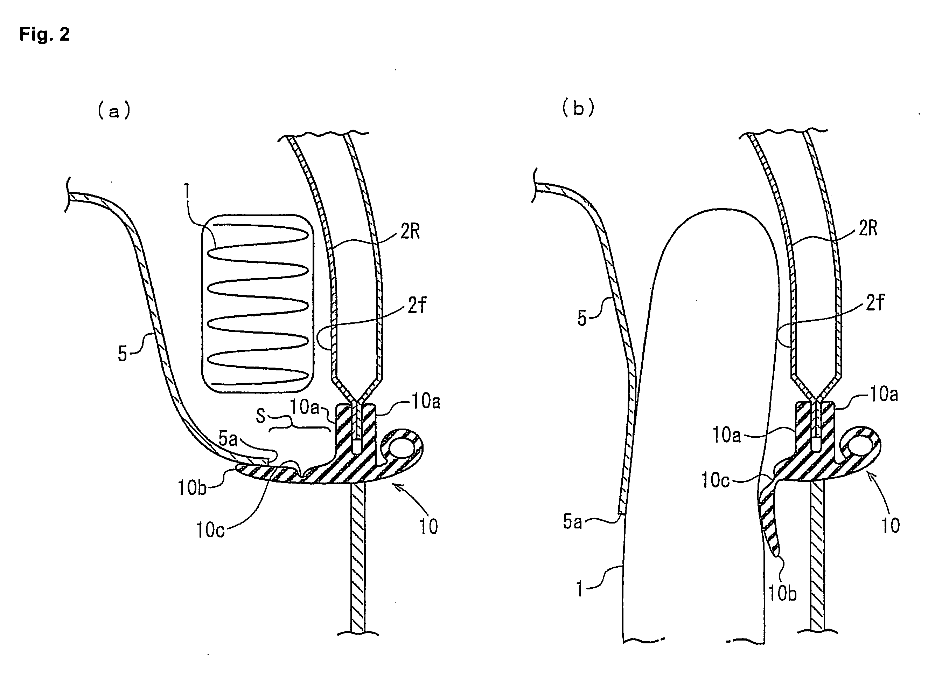

Fig. 1 is a schematic side view showing the interior of the vehicle cabin having a structure according to an embodiment, in which (a) shows a curtain airbag which is not inflated, and (b) shows the curtain airbag which is inflated. Fig. 2(a) is a cross sectional view taken along the lint II-II in Fig. 1(a), and Fig. 2(b) is a cross sectional view showing the same portion as Fig. 2(a) when the curtain airbag is inflated.

In this embodiment, a curtain airbag 1 is arranged from an A-pillar 2A to a roof side rail 2R of a motor vehicle in a state of being folded into an elongated shape extending in the fore-and-aft direction. The rear portion of the curtain airbag 1 is extended to the upper portion of a C-pillar 2C. The reference numeral 2B shows a B-pillar. The curtain airbag 1 starts inflation by gas fed from an inflator 3 when the motor vehicle is involved in a side collision or is fallen on its side, and is inflated an deployed downward of the vehicle body along the side surface in the cabin, such as a door or the respective pillars 2A, 2B, 2C.

The upper edge of the curtain airbag 1 is provided with a lug 4, and the lug 4 is attached to the roof side rail 2R by a fastening member (not shown) such as bolts, rivets, and so on. The front end of the curtain airbag 1 is attached to the A-pillar 2A.

A roof lining (interior panel) 5 is attached so as to cover the cabin side of the vehicle ceiling. A folded body of the curtain airbag 1 is disposed on the backside of the side edge of the roof lining 5.

As shown in the drawings, a space S is formed between the end edge 5a of the side edge of the roof lining 5 and a cabin side surface 2f of the roof side rail 2R. The space S is smaller than the thickness of the curtain airbag 1 in the completely inflated state, but has a size that allows the curtain airbag 1 to pass therethrough in the initial stage of inflation in which the thickness is still small (the state immediately after the folded state is released and downward inflation is initiated) as shown in Fig. 2(b).

The roof lining 5 is configured to be pressed by the curtain airbag 1 and opened toward the cabin to enlarge the space S as the curtain airbag 1 initiates its downward inflation, passes through the space S, and gradually increases in thickness.

As shown in Fig. 2, a weather strip 10 formed of rubber or synthetic resin or the like is attached to the roof side rail 2R. The weather strip 10 has clamping portions 10a including a pair of parallel strips, and the weather strip 10 is secured to the roof side rail 2R with the clamping portions 10a, 10a clamped on a flange (lower edge) of the roof side rail 2R.

The weather strip 10 includes a lip portion 10b extending toward the cabin, and the lip portion 10b overlaps the side edge of the roof lining 5 and closes the space S as shown in Fig. 2(a).

The lip portion 10b is provided with a deformation inducing portion 10c for inducing bending deformation of the lip portion 10b so as to leave the space S by being pressed by the curtain airbag 1 which is in the course of inflation. In this embodiment, the deformation inducing portion 10c is formed of a recessed groove formed on the back surface of the lip portion 10b as shown in Fig. 2(a).

When the vehicle having the curtain airbag installation structure or the curtain airbag apparatus configured as described above is involved into an emergency state such as a side collision or falling sideways, the inflator 3 is activated and injects gas. With gas from the inflator 3, the curtain airbag 1 starts inflation. The curtain airbag 1 is inflated downward through the space S. Although the space S is closed by the lip portion 10b of the weather strip 10, since the lip portion 10b is formed with the deformation inducing portion (the recessed groove) 10c, the curtain airbag 1 can pass through the space S while bending the lip portion 10b easily. Therefore, since the curtain airbag 1 can inflate downward through the space S even when the inner pressure is relatively low, and hence the curtain airbag 1 can be inflated quickly downward without increasing the output of the inflator 3.

The curtain airbag 1 passed through the space S is inflated downwardly along the side surface of the cabin and increases in thickness while opening the roof lining 5. The curtain airbag 1 thus inflated receives the occupant to absorb an impact and prevents the occupant from being thrown out of the vehicle.

The embodiment described above is simply shown as an example of the present invention and may take a form other than that described above. For example, a member other than the weather strip may be used as a closing member for the space S. It is also possible to form the space for allowing the curtain airbag to pass through between a pillar garnish provided along the A-pillar and the A-pillar and close the space with the closing member having the deformation inducing or guiding means.

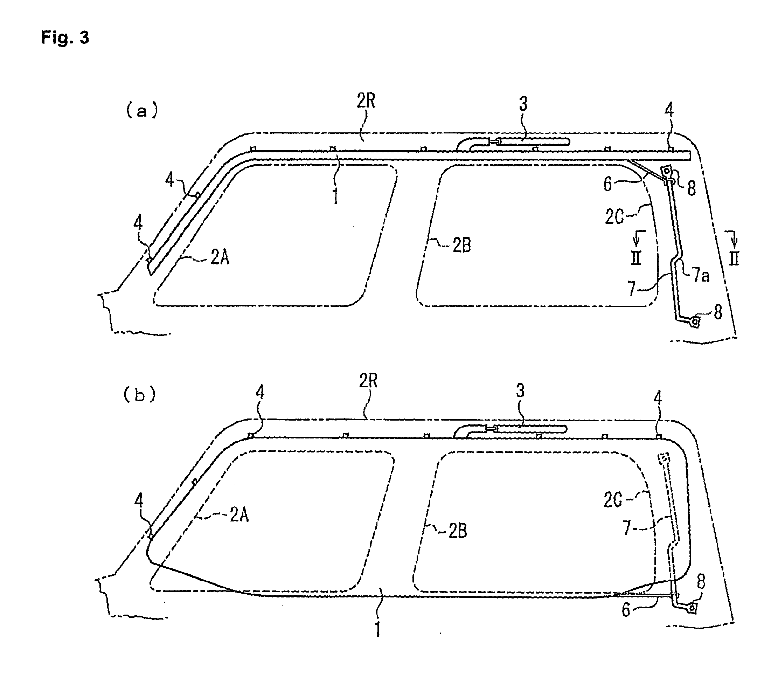

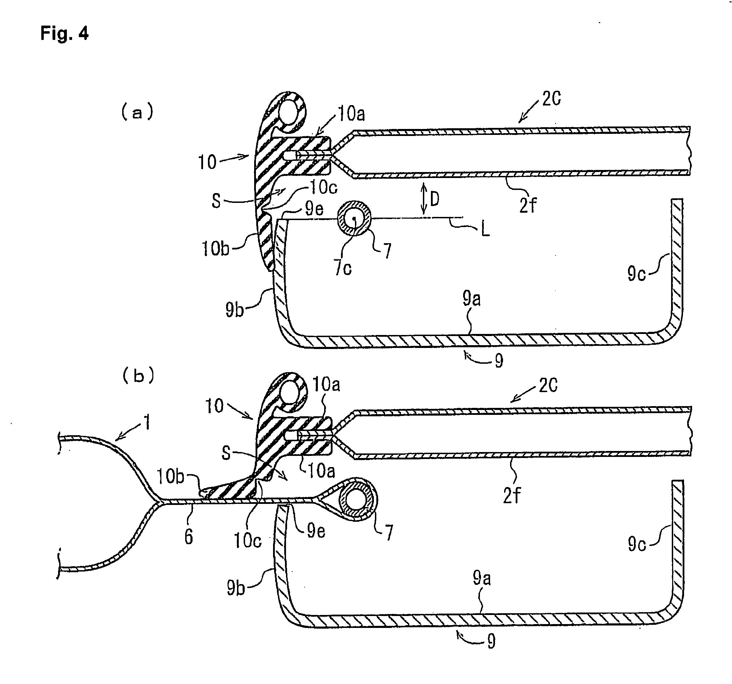

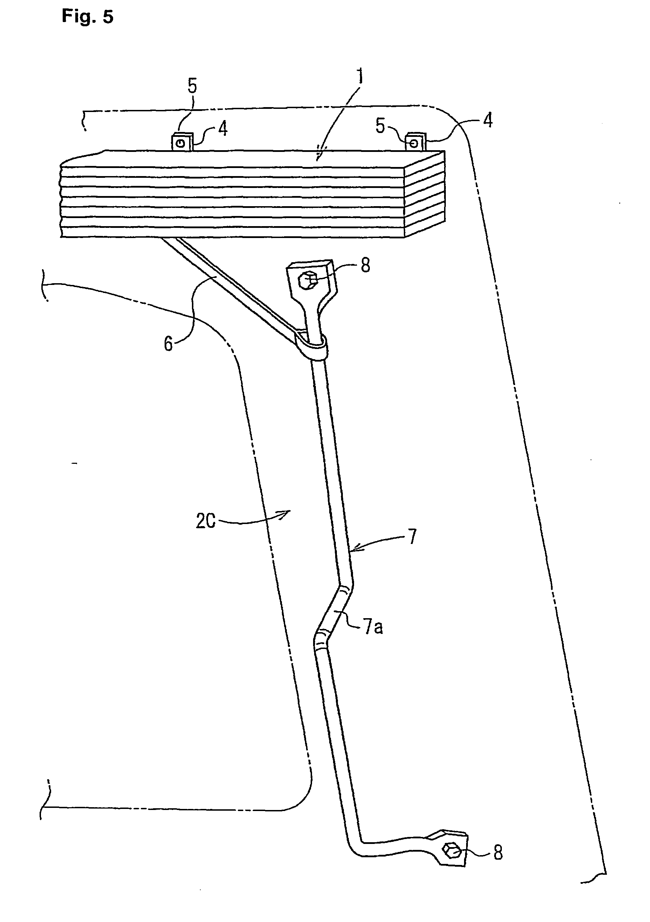

Fig. 3 is a schematic side view of a vehicle cabin provided with a guide mechanism of a curtain airbag according to a further embodiment of the present invention, in which (a) shows the curtain airbag in the non-inflated state, and (b) shows the curtain airbag in the inflated state. Fig. 4(a) is a cross-sectional view taken along the line II-II in Fig. 3(a), and Fig. 4(b) is a cross-sectional view showing a state in which a connecting belt passes through the portion of the cross-section in Fig. 4(a). Fig. 5 is a perspective view showing the curtain airbag and a guide rod.

In this embodiment, a curtain airbag 1 is disposed from an A-pillar 2A to a roof side 2R of a motor vehicle in a state of being folded longitudinally in the fore-and-aft direction. The rear portion of the curtain airbag 1 extends up to the portion above a C-pillar 2C. Reference sign 2B designates a B-pillar. The curtain airbag 1 starts inflating by a supply of gas from an inflator 3 when the motor vehicle is subjected to a side collision or turned sideways, and is inflated and deployed downwardly of the vehicle body along the side surface in the cabin, such as a door and the respective pillars 2A, 2B, and 2C.

As shown in Fig. 5, lugs 4 are provided on the upper edge of the curtain airbag 1, and the lugs 4 are secured to the roof side portion 2R with fixtures 5 such as bolts or rivets. The front end of the curtain airbag 1 is secured to the A-pillar 2A.

The guide rod 7 as a guiding member for guiding the rear end of the curtain airbag 1 along the C-pillar 2C when the curtain airbag 1 is inflated downwardly of the vehicle body along the C-pillar 2C is mounted to the C-pillar 2C of the motor vehicle. The guide rod 7 extends in the vertical direction of the vehicle body along the C-pillar 2C.

The guide rod 7 extends entirely or partly over the range of movement of the end of the curtain airbag 1 from a state in which the curtain airbag 1 is folded to a state in which downward deployment is completed.

The curtain airbag 1 is provided with the connecting belt 6 extending rearward from the rear portion thereof. The extremity of the connecting belt 6 is wound around the guide rod 7, so as to be capable of moving along the guide rod 7. It is also possible to provide a ring at the extremity of the connecting belt 6 and fit the ring loosely on the guide rod 7.

The guide rod 7 is formed of a rod-shaped member and is fixed to the C-pillar 2C with bolts 8 at the upper end and the lower end. The intermediate portion of the guide rod 7 is bent into substantially a crank shape, whereby an anchoring portion 7a for the connecting band 6 is provided. The anchoring portion 7a serves as a stopper for preventing the connecting belt 6 from being retracted upwardly of the anchoring portion 7a.

The guide rod 7 is positioned apart from a cabin-side surface 2f of the C-pillar 2C as a whole by a predetermined distance except for the upper and lower ends thereof.

A pillar garnish 9 is provided so as to cover the cabin side of the C-pillar 2C. The pillar garnish 9 has a substantially angular C-shape in cross section, and includes a main plate portion 9a which extends substantially parallel with the cabin side surface 2f of the C-pillar 2C, and side plate portions 9b, 9c standing from the main plate portion 9a toward the C-pillar 2C. The side plate portion 9b is positioned on the door-side of the C-pillar 2C. There is provided a space S for allowing the connecting belt 6 to pass downward between an edge 9e of the side plate portion 9b on the side of the C-pillar 2C and the cabin-side surface f of the C-pillar 2C.

The distance between the edge 9e and the cabin-side surface 2f is shown as D in Fig. 4(a). The distance D is defined as a distance between a line L which passes the edge 9e and extends in parallel with the cabin side surface 2f and the cabin side surface 2f. In this embodiment, a center axis 7c of the guide rod 7 is positioned above the line L or on the side of the cabin-side surface 2f with respect thereto. Accordingly, the distance between the center axis 7c and the cabin-side surface 2f is equal to, or smaller than, the distance D between the edge 9e and the cabin-side surface 2f.

As shown in Fig. 4, a weather strip 10 formed of rubber, synthetic resin, or the like is mounted to the C-pillar 2C. The weather strip 10 includes clamping portions 10a formed of a pair of parallel strips, and the weather strip 10 is secured to the C-pillar 2C so that the clamping portions 10a, 10a clamp a flange of the C-pillar 2C.

The weather strip 10 includes a lip portion 10b extending toward the cabin, and the lip portion 10b closes the space S by overlapping the side plate portion 9b of the pillar garnish 9.

The lip portion 10b is provided with a deformation inducing portion 10c for inducing or guiding curvature deformation of the lip portion 10b so as to move away from the space S as the connecting band 6 passes through the space S. The deformation inducing portion 10c is formed of a recessed groove extending in the vertical direction formed on the backside (the surface facing the inner side of the pillar garnish 9 via the space S) of the lip portion 10b as shown in Fig. 4(a).

Although not shown in the drawing, an A-pillar garnish provided on the A-pillar 2A, and a roof side garnish or roof lining provided on the roof side 2R cover the folded body of the curtain airbag 1.

In particular, the covering of the folded airbag may be arranged according to the example of Figs. 1 and 2.

In a guide mechanism of the curtain airbag thus configured, when the inflator 3 is activated upon the side collision, sideway roll-over or the like of a vehicle, the curtain airbag 1 starts inflating. The curtain airbag 1 pushes and opens the A-pillar garnish and the roof-side garnish or breaks along a weakened line which is formed in advance, and then is deployed downward along the side surface in the vehicle cabin. At the rear portion of the curtain airbag, upon deployment, the connecting belt 6 moves along the guide rod 7, and the curtain airbag 1 finally reaches the lower portion of the guide rod 7 as shown in Fig. 3(b), so that the curtain airbag 1 becomes a tensed state with the lower edge thereof tightened. The curtain airbag 1 thus inflated can receive an occupant and absorb impact, as well as prevents the occupant from being thrown out of the vehicle.

When the connecting belt 6 of the curtain airbag 1 moves along the guide rod 7 as described above, as shown in Fig. 4(b), the connecting belt 6 moves downward in the space S as if it drives the lip portion 10b of the weather strip 10 away. Since the lip portion 10b is provided with the deformation guiding portion 10c, the connecting belt 6 passes through the space S while bending the lip portion 10b easily toward the cabin.

Therefore, in comparison with the related art in which the connecting belt 6 tears the pillar garnish 9, or moves downward while sliding the pillar garnish 9 in the direction away from the C-pillar 2C, a resistance force applied to the connecting belt 6 is small, and hence the curtain airbag 1 can quickly be inflated downward without increasing the output power of the inflator 3.

Although there may be a case in which the connecting belt 6 slides with respect to the edge 9e of the pillar garnish 9 when the connecting belt 6 passes in the space S, in this embodiment, since the center axis 7c of the guide rod 7 is positioned on the line L or on the side of the cabin-side surface 2f with respect thereto as described above, frictional force between the connecting belt 6 and the edge 9e is extremely small. Therefore, the connecting belt 6 moves smoothly along the guide rod 7.

The above-described embodiment is simply an example of the present invention and may take other forms other than that described above. For example, while the curtain airbag 1 is connected to the guide rod 7 via the connecting belt 6 in the embodiment described above, the main body of the curtain airbag may be connected to the guide rod. It is also possible to employ a guide member other than the guide rod.

While the guide member (guide rod) is mounted to the C-pillar in the above-described embodiment, it is also possible to mount the guide member to the pillars other than the C-pillar (for example, the B-pillar or the D-pillar).

In the present invention, material of the guide rod is not specifically limited, and may be various materials such as metal, synthetic resin, and so on. While the guide rod is a tubular member having a hollow circular cross section as shown in the drawings in the above-described embodiment, it may take the form of a solid rod, and the cross-section can take various configurations.

## Claims

1. A curtain airbag installation structure for a curtain airbag (1) to be deployed downward along the side surface in a vehicle cabin, **characterized in that**
a closing member (10) is provided for closing a space (S) defined for allowing passage of at least a part of the curtain airbag (1), wherein the closing member (10) is provided with a deformation inducing means (10c) for inducing the closing member (10) to deform so as to open the space (S) as the curtain airbag (1) moves downward.

2. A curtain airbag installation structure according to claim 1, wherein a recessed groove is provided as the deformation inducing means (10c).

3. A curtain airbag installation structure according to claim 1 or 2 comprising:
a guide mechanism for guiding the end in the fore-and-aft direction of the curtain airbag (1) which is deployed downward along the side surface in a vehicle cabin, including a guide member (7) for the curtain airbag (1) extending in the vertical direction and attached to a pillar (2C) of the vehicle, and an interior panel (9) attached to the pillar (2C) and covering the guide member (7),
wherein the space (S) being closed by the closing member (10) allows passage of the end of the curtain airbag (1) and is defined between the side portion of the interior panel (9) and the cabin-side surface of the pillar (2C).

4. A curtain airbag installation structure according to claim 3, wherein the curtain airbag (1) is configured in such a manner that a connecting belt (6) extending from the end thereof is provided, the connecting belt (6) is connected to the guide member (7), and the connecting belt is adapted to pass through the space (S) when the curtain airbag (1) is deployed downward.

5. A curtain airbag installation structure according to any one of the preceding claims comprising:
a folded body of a curtain airbag (1) disposed along a roof side rail (2R) at the edge of the vehicle on the ceiling side, the folded body of the curtain airbag (1) being covered by an interior panel (5) attached to the ceiling of the vehicle,
wherein the space (S) for allowing the curtain airbag (1) to pass and being closed by the closing member (10) is formed between the side portion of the interior panel (5) and the roof side rail (2R).

6. A curtain airbag apparatus comprising
a curtain airbag (1) deploying downward along the side surface of a vehicle cabin and
a curtain airbag installation structure according to any one of the preceding claims.
